# EUROPÄISCHE PATENTSCHRIFT

(11) **EP 2 199 236 B1**
(45) Veröffentlichungstag und Bekanntmachung des Hinweises auf die Patenterteilung: **09.01.2013**
(21) Anmeldenummer: 09014409.8
(22) Anmeldetag: 18.11.2009
(51) Int. Cl.: B65G 65/28

(54) **Positioniervorrichtung für Bandförderanlagen**
Positioning device for conveyer belt assemblies
Dispositif de positionnement pour installations de transport de bande

(30) Priorität: 16.12.2008 DE 202008016645 U
(43) Veröffentlichungstag der Anmeldung: 23.06.2010
(73) Patentinhaber: BEA Elektrotechnik und Automation Technische Dienste Lausitz GmbH, 03130 Spremberg (DE)
(72) Erfinder: Kochte, Karsten, 02999 Lohsa (DE); Martin, Matthias, 03197 Jänschwalde (DE)
(74) Vertreter: Kirchner, Veit

(56) Entgegenhaltungen:
- US-A- 5 404 988
- US-A- 6 065 922

## Beschreibung

Die Erfindung betrifft eine Vorrichtung zum Positionieren von in Position bzw. Lage veränderlichen Übergabestellen von Schüttgütern auf Bandförderanlagen, insbesondere im Grubenbetrieb des Kohletagebaus. An derartigen Übergabestellen werden Schüttgüter von einem zufördernden Transportband auf ein abförderndes Transportband einer Bandförderanlage übergeben. Wenn sich beispielsweise die räumliche Lage von zuförderndem und/oder abförderndem Transportband verändert, kann ein Positionieren der Übergabestelle erforderlich werden, um zu vermeiden, daß Schüttgut neben das abfördernde Transportband fällt.

Dies ist unter anderem bekannt vom Einsatz von Schaufelradbaggern im Kohletagebau. Dort gelangt gebaggertes Schüttgut auf ein erstes Transportband, das im Verladeausleger des Baggers läuft und sich mit diesem mitbewegt. Von dem ersten Band wird das Schüttgut auf ein zweites Transportband übergeben, das mit dem ersten nicht mechanisch verbunden ist. Wenn sich der Bagger bewegt, muß durch ständiges Nachführen dafür gesorgt werden, daß die Übergabestelle über dem zweiten Band in Position gehalten wird, um ein Verlust von Schüttgut zu vermeiden.

Bei vorbekannten Bandförderanlagen erfolgt die Positionierung der Übergabestelle manuell. Dies ist aufgrund des Personalaufwandes und unvermeidlicher Bedienfehler nachteilig. In der Vergangenheit ist daher versucht worden, die Positionierung der Übergabestellen zu automatisieren. Eine Positionierung durch mechanische Verbindungen oder mechanische Abtastungen hat sich als unpraktikabel erwiesen, insbesondere aufgrund mechanischer Zerstörungen durch das geförderte Schüttgut. Ebenfalls als unpraktikabel hat sich der Einsatz von optischen Sensoriken erwiesen, und zwar aufgrund der nicht beherrschbaren klimatischen Verhältnisse und der massiven Verschmutzungen.

US 5,404,988 A offenbart eine mobile Verbindungsbandbrücke für den Tagebau, sowie eine Vorrichtung zum Positionieren einer in ihrer Position veränderlichen Übergebestelle gemäß dem Oberbegriff des Anspruchs 1. Die Verbindungsbandbrücke ist an ihren beiden Enden jeweils mit einem Fahrwerk verbunden. An einem Fahrwerk sind ein Strossenband und ein Abwurfwagen vorgesehen. Ferner ist ein Weggeber vorgesehen, der den Abstand zwischen dem Fahrwerk und dem Abwurfwagen ermittelt und basierend auf dem ermittelten Wert das Fahrwerk steuert.

US 6,065,922 A offenbart eine Beladevorrichtung zum Beladen eines Lkws, eines Boots oder dergleichen mit einem pulverförmigen Material. Die Beladevorrichtung ist oberhalb des Lkws vorgesehen und saugt bei einem Befüllen des Lkws den aufgewirbelten Staub ab.

Vor diesem Hintergrund ist es Aufgabe der vorliegenden Erfindung, eine Vorrichtung zum Positionieren der Übergabestelle von Schüttgütern vorzuschlagen, die die Nachteile des Standes der Technik vermeidet. Vorzugsweise soll die erfindungsgemäße Vorrichtung ein weitgehend automatisches und/oder möglichst genaues Positionieren erlauben und/oder eine hohe Betriebs- bzw. Ausfallsicherheit bieten.

Erfindungsgemäß wird die Aufgabe durch eine Vorrichtung nach Anspruch 1 gelöst. Bevorzugte Ausgestaltungen ergeben sich aus den Unteransprüchen.

Gegenstand von Anspruch 1 ist eine Vorrichtung zum Positionieren einer in ihrer Position bzw. Lage veränderlichen Übergabestelle, an der Schüttgüter von einem zufördernden Transportband auf ein abförderndes Transportband einer Bandförderanlage übergeben werden. Erfindungsgemäß weist die Positioniervorrichtung eine Steuerungseinrichtung auf, die mittels einer Radar-Sensorik die Lage der Übergabestelle relativ zum abfördernden Transportband erfaßt. Auf dieser Grundlage generiert die Steuerungseinreichung Steuersignale für die Positionierung der Übergabestelle. Anhand der Steuersignale kann die Positionierung automatisiert erfolgen. Durch den Einsatz der Radar-Sensorik wird ein hohes Maß an Betriebs- bzw. Ausfallsicherheit erreicht, da mit Radar-Sensoren die Lage des abfördernden Transportbandes ohne mechanischen Kontakt zuverlässig ermittelt werden kann. Des weiteren sind Radar-Sensoren weitgehend unempfindlich gegen Verschmutzung durch das geförderte Schüttgut bzw. den Förderbetrieb. Die Steuerungseinrichtung erfaßt mittels der Radar-Sensorik die relative Lage der Übergabestelle zum abfördernden Transportband. So kann beispielsweise erfaßt werden, wenn sich die Übergabestelle nicht über dem abfördernden Transportband befindet, so daß Schüttgut danebenfällt. Es können dann Steuersignale generiert werden, um die Übergabestelle über das abfördernde Band zu bewegen. Dazu ist beispielsweise das zu- und/oder das abfördernde Transportband verschiebbar, verschwenkbar oder anderweitig im Raum bewegbar ausgestaltet und die Übergabestelle wird dadurch über das abfördernde Transportband gebracht, daß die Steuersignale über entsprechende Antriebe eine entsprechende Veränderung der Lage des zu- und/oder abfördernden Transportbandes im Raum steuern. Die Steuereinrichtung kann auch so ausgestaltet sein, daß erfaßt werden kann, wenn sich Übergabestelle und abförderndes Transportband relativ zueinander bewegen, insbesondere von einander weg bewegen. Auf der Grundlage der Erfassung dieser Bewegung können Steuersignale generiert werden, um die Übergabestelle über dem abfördernden Transportband zu halten.

Nach einer vorteilhaften Ausgestaltung generiert die Steuerungseinrichtung derartige Steuersignale, daß die Übergabestelle konstant über eine vorgegebenen Längsachse des abfördernden Transportbandes gehalten wird. Vorzugsweise kann dies die Mittelachse des abfördernden Bandes sein, so daß das Schüttgut mittig aufgegeben wird. Hierdurch kann eine besonders geeignete Beladung des abfördernden Bandes erreicht werden.

In einer anderen bevorzugten Ausgestaltung umfaßt die Radar-Sensorik einen Doppler-Effekt-Radar-Sensor. Dieser ist vorzugsweise am zufördernden Transportband angeordnet, beispielsweise am Gehäuse eines Verladeauslegers, in dem das zufördernde Transportband umläuft, oder an der Schurre, durch die das Schüttgut vom Verladeausleger nach unten abgegeben wird. Da der Doppler-Effekt-Radar-Sensor geschwindigkeits- bzw. bewegungssensitiv ist, kann die Förderbewegung des abfördernden Transportbandes erfaßt werden. Daraus kann die Lage des abfördernden Bandes ermittelt und eine Positionierung der Übergabestelle ermöglicht werden. Vorteilhafterweise hat Doppler-Effekt-Radar-Sensor einen Scann-Bereich, der die gesamte Breite oder einen bestimmten Teil der Breite des abfördernden Transportbandes überdecken kann.

Nach einer anderen bevorzugten Ausgestaltung umfaßt die Radar-Sensorik einen Distanz-Radar-Sensor. Auch dieser ist vorzugsweise am zufördernden Transportband angeordnet und dient zur Erfassung der Lage eines Seitenrandes oder der beiden Seitenränder des abfördernden Transportbandes. Aus der Lageinformation über die Seitenränder können Steuersignale zur geeigneten Positionierung der Übergabestelle, beispielsweise mittig über dem abfördernden Band, generiert werden.

Nach einer weiter bevorzugten Ausgestaltung erfaßt der Distanz-Radar-Sensor die Seitenränder des abfördernden Transportbandes durch Auswertung der Entfernung zum Planum. Das abfördernde Transportband ist gegenüber seiner Umgebung erhöht und damit näher am zufördernden Transportband, beispielsweise näher am Ende eines Verladeauslegers, in dem das zufördernde Transportband umläuft. Aufgrund der erhöhten Position des abfördernden Transportbandes gegenüber der Umgebung kann ein am zufördernden Transport geeignet angeordneter Distanz-Radar-Sensor, der die Entfernung zum Planum erfaßt, die Seitenränder des abfördernden Transportbandes als Kante wahrnehmen.

Nach einer weiter bevorzugten Ausgestaltung wertet die Steuerungseinrichtung bei der Erfassung der Lage der Seitenränder des abfördernden Transportbandes die Signale von mindestens zwei Abtaststrahlen aus, deren Abtastbereiche vorzugsweise benachbart sind und von einem oder mehreren Distanz-Radar-Sensoren generiert sein können. Durch Vergleich der Signale von solcher Abtaststrahlen kann unter anderem die Richtung der Lageänderung der Übergabestelle relativ zum abfördernden Transportband erfaßt werden, weil beispielsweise erkannt werden kann, wenn ein Seitenrand des abfördernden Transportbandes von dem Abtastbereich eines Strahls in den Abtastbereich eines benachbarten Strahls übertritt. Auf dieser Grundlage können dann Steuersignale für die Positionierung der Übergabestelle (30) generiert werden.

Die Radar-Sensorik kann auch mehrere Doppler-Effekt-Radar-Sensoren und/oder mehrere Distanz-Radar-Sensoren umfassen.

Nach einer anderen bevorzugten Ausgestaltung umfaßt die Vorrichtung ein Hub- und/oder Schwenkwerk, mit dem die räumliche Lage des zufördernden Transportbandes verändert werden kann, beispielsweise in dem ein Verladeausleger bewegt wird, in dem das Transportband umläuft. Die von der Steuerungseinrichtung generierten Steuersignale steuern die Hub- und/oder Schwenkantriebe zur Positionierung der Übergabestelle.

Nach einer anderen bevorzugten Ausgestaltung ermittelt die Steuerungseinrichtung mit der Radar-Sensorik die Lage und/oder die Geometrie der Beladung des abfördernden Transportbandes mit Schüttgut. Auf dieser Grundlage werden Signale zur Positionierung der Übergabestelle generiert. Diese Ausgestaltung erweist sich als besonders vorteilhaft, wenn das abfördernde Transportband vor Erreichen der Übergabestelle bereits teilweise beladen ist. Dann kann die Zuladung vom zufördernden Transportband an der Übergabestelle unter Berücksichtigung der bereits vorhandenen Beladung erfolgen.

Ein Ausführungsbeispiel der Erfindung wird anhand der Figuren 1 bis 3 beschrieben. Dabei zeigen:
- Fig. 1:: Eine Draufsicht auf eine erfindungsgemäße Vorrichtung, wobei zuförderndes und abförderndes Transportband einen spitzen Winkel einschließen;
- Fig. 2:: eine Draufsicht auf eine erfindungsgemäße Vorrichtung, wobei zuförderndes und abförderndes Transportband einen rechten Winkel einschließen;
- Fig. 3:: eine Seitenansicht einer erfindungsgemäßen Vorrichtung.

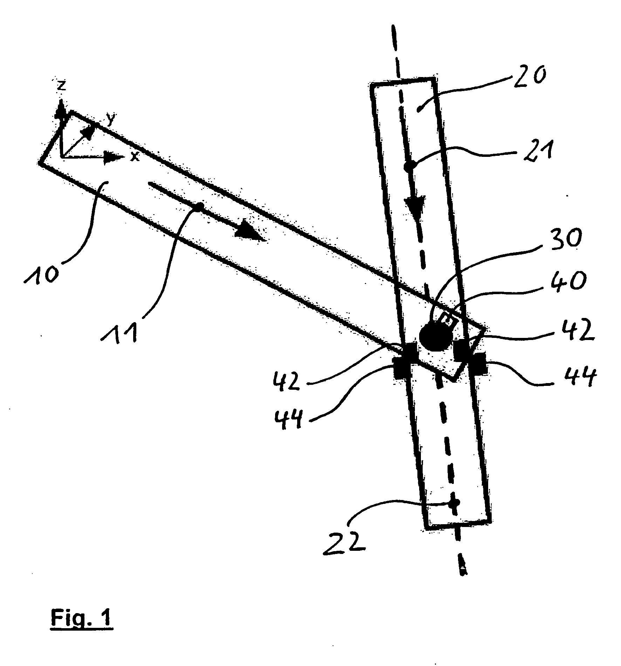

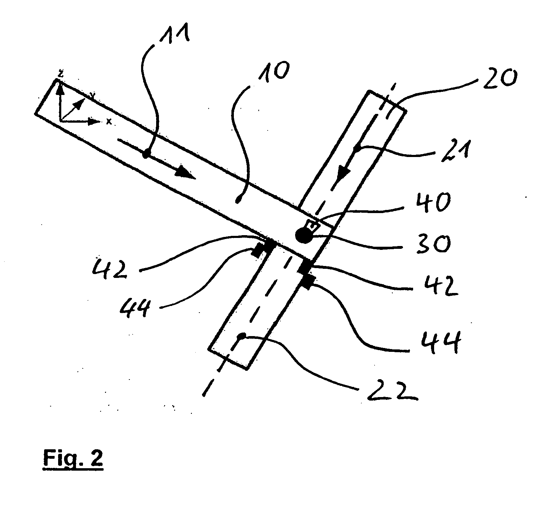

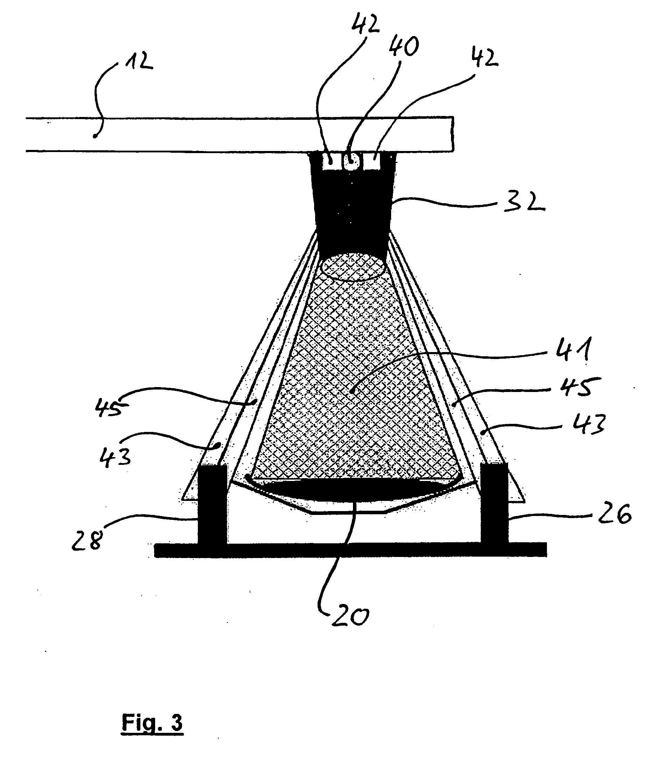

Figuren 1 und 2 zeigen eine Draufsicht auf eine erfindungsgemäße Vorrichtung. Ein zuförderndes Transportband 10 fördert Schüttgut in der mit dem Pfeil 11 gezeigten Richtung zur Übergabestelle 30. Wie mit dem Koordinatenkreuz (x, y, z) angedeutet, ist die Lage des zufördernden Transportbandes in allen Raumrichtungen veränderlich. Beispielsweise kann es sich um das im Verladeausleger 12 eines Schaufelradbaggers laufende Transportband 10 handeln. Bei der in Figur 1 gezeigten Situation trifft das zufördernde Transportband 10 in spitzem Winkel auf das abfördernde Transportband 20. Bei der in Fig. 2 gezeigten Situation trifft das zufördernde Band 10 in rechtem Winkel auf das abfördernde Band. An der Übergabestelle 30 fällt das Schüttgut durch die in Figur 3 gezeigte Schurre 32 auf das abfördernde Transportband 20. Dieses fördert das Schüttgut in der mit dem Pfeil 21 gezeigten Transportrichtung ab. Die Übergabestelle 30 befindet sich über der Mittellinie 22 des abfördernden Transportbandes 20, so daß das vom zufördernden Transportband 10 zugeförderte Schüttgut mittig auf das abfördernde Transportband 20 aufgegeben wird.

Das zufördernde Transportband 10 ist nicht mechanisch, insbesondere nicht starr, mit dem abfördernden Transportband 20 verbunden. Die räumliche Lage des zufördernden Transportbandes 10 kann sich verändern, beispielsweise wenn sich der Schaufelradbagger, in dessen Verladeausleger 12 das zufördernde Transportband 10 umläuft, bewegt. Dann muß dafür gesorgt werden, daß die Übergabestelle 30 mit der Schurre 32 über dem abfördernden Transportband 20 gehalten wird, damit kein Schüttgut danebenfällt. Idealerweise wird die Übergabestelle 30 über einer vorgegebenen Längsachse 22, beispielsweise der Mittelinie 22, des abfördernden Transportbandes 20 gehalten.

Dies wird gemäß dem Ausführungsbeispiel mit einer Steuerungseinrichtung erreicht, die mittels einer Radar-Sensorik 40, 42, 44 die Lage und Bewegung der Schurre 32 relativ zum abfördernden Transportband 20 erfaßt. Die Radar-Sensorik umfaßt einen Doppler-Effekt-Radar-Sensor 40 und zwei Paare von Distanz-Radar-Sensoren 42 und 44. Der Doppler-Effekt-Radar-Sensor 40 ist an der Schurre 32 des Verladeauslegers 12 angebracht. Sein Scann-Bereich ist nach unten gerichtet, so daß er ein unter der Schurre 32 laufendes, abförderndes Transportband 20 erfassen kann. Da der Doppler-Effekt-Radar-Sensor geschwindigkeitssensitiv ist, kann er das abfördernde Transportband über dessen Förderbewegung erfassen. Durch Auswertung kann die räumliche Lage und Bewegung des abfördernden Transportbandes 20 relativ zur Schurre 32 ermittelt werden. Des weiteren umfaßt die Radar-Sensorik zwei Paare von Distanz-Radar-Sensoren 42 und 44, die ebenfalls in der Nähe der Schurre 32 bzw. der Übergabestelle 30 am Gehäuse des zufördernden Transportbandes 10, beispielsweise am Ende des Verladeausleger 12 des Schaufelradbaggers, angebracht sind. Die Distanz-Radar-Sensoren 42 und 44 bestimmen die Lage des abfördernden Transportbandes 20 relativ zur Schurre 32 durch Erfassung der in Figur 3 gezeigten Seitenränder 26 und 28 des abfördernden Transportbandes 20.

Die Vorrichtung umfaßt gemäß dem Ausführungsbeispiel des weiteren ein nicht gezeigtes Hub- und Schwenkwerk zum Heben und Schwenken des zufördernden Transportbandes 10 bzw. des Verladeauslegers 12. Mit der aus dem Doppler-Effekt-Radar-Sensor 40 und den Distanz-Radar-Sensoren 42 und 44 gebildeten Radar-Sensorik wird die Lage und Bewegung der Schurre 32 relativ zum abfördernden Transportband 20 erfaßt. Die Steuerungseinrichtung generiert auf der Grundlage erfaßten relativen Lage und Bewegung Steuersignale zur Positionierung der Schurre über dem abfördernden Transportband. Das Hub- und Schwenkwerk wird durch Steuersignale der Steuerungseinrichtung gesteuert. Wird mit der Radar-Sensorik beispielsweise erfaßt, daß sich die Übergabestelle 30 bzw. die Schurre 32 von der Mittellinie 22 des abförderndem Transportbandes 20 wegbewegt, so erzeugt die Steuerungseinrichtung Steuersignale, die das Hub- und Schwenkwerk derart antreiben, daß die Übergabestelle über der Mittellinie 22 des abförderndem Transportbandes 20 gehalten wird. Die Steuerungseinrichtung nutzt die erfaßten Steuersignale also dazu, das Hub- und Schwenkwerk derart zu regeln, daß die Schurre über einer vorgegebenen Längsachse des abfördernden Transportbandes gehalten wird.

Figur 3 zeigt eine Seitenansicht einer erfindungsgemäßen Vorrichtung. Das zufördernde Transportband 10 verläuft in einem Gehäuse, das beispielsweise durch den Verladeausleger 12 eines Schaufelradbaggers gebildet sein kann. Durch die Schurre 32 am Verladeausleger 12 wird das vom zufördernden Transportband 10 zugeförderte Schüttgut nach unten abgeworfen und fällt auf das abfördernde Transportband 20. In der Nähe der Schurre 32 ist am Verladeausleger 12 der Doppler-Effekt-Radar-Sensor 40 angebracht. Der Scann-Bereich 41 des Doppler-Effekt-Radar-Sensors 40 überspannt mehr oder weniger genau die Breite des abfördernden Transportbandes. Aus der erfaßten Förderbewegung des abfördernden Transportbandes 20 kann mit dem Doppler-Effekt-Radar-Sensor die Lage des abfördernden Transportbandes ermittelt werden. Des weiteren ist am Verladeausleger 12 ein Paar von Distanz-Radar-Sensoren 42 mit den Abtaststrahlen 43 angebracht. Ein weiteres Paar von Distanz-Radar-Sensoren 44 hat die Abtaststrahlen 45. Diese Distanz-Radar-Sensoren 42 und 44 können die Seitenränder 26 und 28 des abfördernden Transportbandes durch Auswertung der Entfernung zum Planum erfassen. Verschiebt sich in Figur 3 beispielsweise der Verladeausleger 12 mit der Schurre 32 nach links, so verschwindet der linke Seitenrand 28 aus dem Abtastbereich des linken Abtaststrahls 43, bleibt aber im Abtastbereich des linken Abtaststrahls 45. Bewegt sich der Verladeausleger 12 noch weiter nach links, so verschwindet der linke Seitenrand 28 auch aus dem Abtastbereich des linken Abtaststrahls 45. Die rechten Abtaststrahlen 43 und 45 erfassen den rechten Seitenrand 26 und/oder das Transportband 20. Aus diesen Informationen kann die relative Bewegung Schurre 32 zum abfördernden Transportband 20 ermittelt werden, und es können entsprechende Steuersignale generiert werden, um diese Bewegung zu korrigieren bzw. die Schurre über dem abfördernden Transportband 20 zu halten.

Mit dem Doppler-Effekt-Radar-Sensor 40 und den beiden Paaren von Distanz-Radar-Sensoren 42 und 44 steht ein redundantes System zur Erfassung der relativen Lage bzw. Bewegung der Übergabestelle 30 relativ zum abfördernden Transportband 20 zur Verfügung, das eine sehr große Betriebs- bzw. Ausfallsicherheit aufweist und ein sehr genaues automatisches Positionieren der Übergabestelle 30 erlaubt.

Der Doppler-Effekt-Radar-Sensor kann auch genutzt werden um die Geometrie und/oder Lage von Schüttgut zu erfassen, das sich bereits vor der Übergabestelle 30 auf dem abfördernden Transportband 20 befindet. Dabei kann es sich beispielsweise um Schüttgut handeln, das an einer vorgelagerten Stelle aufgegeben worden ist. Dies erlaubt es, an der Übergabestelle 30 Schüttgut auf geeignete, z. B. wenig beladene bzw. freie Bereiche des abfördernden Transportbandes 20 aufzugeben.

## Patentansprüche

1. Vorrichtung zum Positionieren einer in ihrer Position veränderlichen Übergabestelle (30), an der Schüttgüter von einem zufördernden Transportband (10) auf ein abförderndes Transportband (20) einer Bandförderanlage übergeben werden, **dadurch gekennzeichnet, daß** eine Steuerungseinrichtung mittels einer Radar-Sensorik (40, 42, 44) die Lage der Übergabestelle (30) relativ zum abfördernden Transportband (20) erfaßt und auf dieser Grundlage Steuersignale für die Positionierung der Übergabestelle (30) generiert.

2. Vorrichtung nach Anspruch 1, **dadurch gekennzeichnet, daß** die Steuerungseinrichtung Steuersignale generiert, um die Übergabestelle (30) über einer vorgegebenen Längsachse (22), vorzugsweise der Mittelachse (22), des abfördernden Transportbandes (20) zu halten.

3. Vorrichtung nach Anspruch 1 oder 2, **dadurch gekennzeichnet, daß** die Radar-Sensorik einen Doppler-Effekt-Radar-Sensor (40) zur Erfassung der Förderbewegung des abfördernden Transportbandes (20) umfaßt.

4. Vorrichtung nach einem der vorhergehenden Ansprüche, **dadurch gekennzeichnet, daß** die Radar-Sensorik einen Distanz-Radar-Sensor (42, 44) zur Erfassung der Lage eines Seitenrandes (26, 28) oder beider Seitenränder (26, 28) des abfördernden Transportbandes (20) umfaßt.

5. Vorrichtung nach dem vorhergehenden Anspruch, **dadurch gekennzeichnet, daß** der mindestens eine Seitenrand (26, 28) des abfördernden Transportbandes (20) mittels eines am zufördernden Transportband (10) angeordneten Distanz-Radar- Sensors (42, 44) durch Auswertung der Entfernung zum Planum erfaßt wird.

6. Vorrichtung nach einem der beiden vorhergehenden Ansprüche, **dadurch gekennzeichnet, daß** die Steuerungseinrichtung bei der Erfassung der Lage der Seitenränder (26, 28) des abfördernden Transportbandes (20) die Signale von mindestens zwei Abtaststrahlen (43, 45) auswertet und durch Vergleich der Signale die Richtung der Lageänderung der Übergabestelle relativ zum abfördernden Transportband erfaßt und auf dieser Grundlage Steuersignale für die Positionierung der Übergabestelle (30) generiert.

7. Vorrichtung nach einem der vorhergehenden Ansprüche, **dadurch gekennzeichnet, daß** das zufördernde Transportband (10) mit einem Hub- und/oder Schwenkwerk bewegbar ist und die Steuerungseinrichtung Steuersignale für die Hub- und/oder Schwenkantriebe generiert.

8. Vorrichtung nach einem der vorhergehenden Ansprüche, **dadurch gekennzeichnet, daß** die Steuerungseinrichtung mittels der Radar-Sensorik (40, 42, 44) Lage und/oder Geometrie der Beladung des abfördernden Transportbandes (20) mit Schüttgut erfaßt und auf dieser Grundlage Signale zur Positionierung der Übergabestelle (30) generiert.

## Claims

1. An apparatus for positioning a transfer point (30) having a variable position at which bulk goods are transferred from an infeeding transport belt (10) to an outfeeding transport belt (20) of a belt conveying system, **characterised in that** a control device detects the position of the transfer point (30) relative to the outfeeding transport belt (20) by means of a radar sensor system (40, 42, 44) and generates control signals for the positioning of the transfer point (30) on this basis.

2. An apparatus in accordance with claim 1, **characterised in that** the control device generates control signals to hold the transfer point (30) over a predefined longitudinal axis (22), preferably over the middle axis (22), of the outfeeding transport belt (20).

3. An apparatus in accordance with claim 1 or claim 2, **characterised in that** the radar sensor system includes a Doppler effect radar sensor (40) for detecting the conveying movement of the outfeeding transport belt (20).

4. A device in accordance with one of the preceding claims, **characterised in that** the radar sensor system includes a distance radar sensor (42, 44) for detecting the position of one side margin (26, 28) or of both side margins (26, 28) of the outfeeding transport belt (20).

5. A device in accordance with the preceding claim, **characterised in that** the at least one side margin (25, 28) of the outfeeding transport belt (20) is detected by means of a distance radar sensor (42, 44) arranged at the infeeding transport belt (10) by evaluating the distance from the planum.

6. A device in accordance with one of the two preceding claims, **characterised in that** the control device evaluates the signals of at least two scanning rays (43, 45) in the detection of the position of the side margins (26, 28) of the outfeeding transport belt (20) and detects the direction of the positional change of the transfer point relative to the outfeeding transport belt by a comparison of the signals and generates control signals for the positioning of the transfer point (30) on this basis.

7. A device in accordance with one of the preceding claims, **characterised in that** the infeeding transport belt (10) can be moved by a lifting and/or pivoting mechanism and the control device generates control signals for the lifting and/or pivoting drives.

8. A device in accordance with one of the preceding claims, **characterised in that** the control device detects the position and/or geometry of the load of the outfeeding transport belt (20) with bulk goods by means of the radar sensor system (40, 42, 44) and generates signals for positioning the transfer point (30) on this basis.

## Revendications

1. Dispositif destiné au positionnement d'un poste de transfert (30) modifiable dans sa position, auquel des marchandises en vrac sont transférés d'une bande de transport d'amenée (10) sur une bande de transport d'évacuation (20) d'une installation de convoyage, **caractérisé en ce qu'**un dispositif de commande saisit à l'aide d'une technique sensorielle par radar (40, 42, 44) la position du poste de transfert (30) par rapport à la bande de transport évacuation (20), et génère sur cette base des signaux de commande pour le positionnement du poste de transfert (30).

2. Dispositif selon la revendication 1, **caractérisé en ce que** le dispositif de commande génère des signaux de commande afin de maintenir le poste de transfert (30) sur un axe longitudinal préconisé (22), de préférence l'axe central (22), de la bande de transport d'évacuation (20).

3. Dispositif selon les revendications 1 ou 2, **caractérisé en ce que** la technique sensorielle par radar comprend un capteur radar à effet Doppler (40) pour la saisie du mouvement de transport de la bande de transport d'évacuation (20).

4. Dispositif selon une quelconque des revendications précédentes, **caractérisé en ce que** la technique sensorielle par radar comprend un capteur radar de distance (42, 44) pour la saisie de la position d'une bordure latérale (26, 28) ou des deux bordures latérales (26, 28) de la bande de transport d'évacuation (20).

5. Dispositif selon la revendication précédente, **caractérisé en ce qu'**au moins une des bordures latérales (26, 28) de la bande de transport d'évacuation (20) est saisie à l'aide d'un capteur radar de distance (42, 44) disposé sur la bande de transport d'amenée (10) par analyse de l'éloignement par rapport au plan.

6. Dispositif selon une quelconque des deux revendications précédentes, **caractérisé en ce que** le dispositif de commande, lors de la saisie de la position des bordures latérales (26, 28) de la bande de transport d'évacuation (20), analyse les signaux d'au moins deux faisceaux de balayage (43, 45) et saisit par comparaison des signaux la direction de la modification de position du poste de transfert par rapport à la bande de transport d'évacuation, et sur cette base, génère des signaux de commandes pour le positionnement du poste de transfert (30).

7. Dispositif selon une quelconque des revendications précédentes, **caractérisé en ce que** la bande de transport d'amenée (10) est mobile à l'aide d'un dispositif de levage et/ou de pivotement, et **en ce que** le dispositif de commande génère des signaux de commande pour les entraînements de levage et/ou de pivotement.

8. Dispositif selon une quelconque des revendications précédentes, **caractérisé en ce que** le dispositif de commande saisit, à l'aide de la technique sensorielle par radar (40, 42, 44), la position et/ou la géométrie du chargement de la bande de transport d'évacuation (20) en marchandise en vrac, et sur cette base, génère des signaux destinés au positionnement du poste de transfert (30).
